# EUROPÄISCHE PATENTSCHRIFT

(11) **EP 0 675 758 B1**
(45) Veröffentlichungstag und Bekanntmachung des Hinweises auf die Patenterteilung: **26.03.1997**
(21) Anmeldenummer: 94903760.0
(22) Anmeldetag: 13.12.1993
(51) Int. Cl.: B01J 2/20, B01J 2/10, C11D 17/06

(54) **HERSTELLUNG VERDICHTETER, OBERFLÄCHLICH KLEBRIGER GRANULATE SOWIE ZUR DURCHFÜHRUNG DES VERFAHRENS GEEIGNETE VORRICHTUNG**
METHOD OF PRODUCING COMPRESSED, SURFACE-TACKY GRANULAR MATERIALS AND A DEVICE SUITABLE FOR CARRYING OUT THE METHOD
PROCEDE DE FABRICATION DE GRANULES COMPRIMES A SURFACE COLLANTE ET DISPOSITIF DE MISE EN UVRE DUDIT PROCEDE

(30) Priorität: 22.12.1992 DE 4243549
(43) Veröffentlichungstag der Anmeldung: 11.10.1995
(73) Patentinhaber: Henkel Kommanditgesellschaft auf Aktien, 40191 Düsseldorf (DE)
(72) Erfinder: SCHULZE, Wieland, D-40764 Langenfeld (DE); LOHMÜLLER, Walter, D-40589 Düsseldorf (DE); ARTIGA-GONZALES, Rene-Andres, D-40589 Düsseldorf (DE); SEITER, Wolfgang, D-49469 Neuss (DE)
(86) Internationale Anmeldenummer: EP9303516
(87) Internationale Veröffentlichungsnummer: WO9414528

(56) Entgegenhaltungen:
- WO-A-91/13678
- GB-A- 1 438 132
- US-A- 3 052 557
- US-A- 3 249 657

## Beschreibung

Die Erfindung betrifft ein Verfahren zum Herstellen verdichteter, oberflächlich klebriger Granulate, die insbesondere in Wasch- und Reinigungsmitteln eingesetzt werden. Dabei wird ein homogenes Vorgemisch über Lochdüsen bei hohen Drucken zu einem Strang verpreßt. Der nach unten aus den im wesentlichen vertikal angeordneten Lochdüsen austretende Strang wird mit einem rotierenden Abschlagmesser auf die vorbestimmte Partikellänge quer zerteilt, so daß die Partikel radial weggeschleudert werden.

Aus den internationalen Patentanmeldungen WO91/02047 sowie WO91/13678 ist ein Verfahren zum Herstellen verdichteter Granulate von Inhaltsstoffen von Wasch- und Reinigungsmitteln bekannt. Die Granulate werden aus Vorgemischen von wenigstens anteilsweise festen Inhaltsstoffen unter Zusatz von wasserlöslichen, wasseremulgierbaren oder wasserdispergierbaren Plastifizier- und/oder Gleitmitteln erhalten. Die Vorgemische werden zu einer homogenen Masse verarbeitet und bei Drucken zwischen 25 und 200 bar über Lochformen mit Öffnungsweiten der vorbestimmten Granulatdimension Strangförmig verpreßt. Als Homogenisier-Vorrichtung können übliche Granulier-Einrichtungen, beispielsweise Pelletpressen, Extruder mit ein und zwei Wellen, Planetwalzenextruder und andere Apparate eingesetzt werden. Ein kontinuierlich arbeitender Zwei-Schnecken-Extruder ist hier bevorzugt. Das im Extruder plastifizierte Vorgemisch tritt in Form feiner Stränge durch eine Lochdüsenplatte aus. Das Extrudat wird mittels eines rotierenden Abschlagmessers zu kugelförmigen bis zylindrischen Granulatkörnern zerkleinert und dieses noch plastische, feuchte Primär-Granulat in einem üblichen Rondiergerät unter Mitverwendung geringer Mengen an Trockenpulver abgerundet. Zur Rezepturvervollständigung können weitere Wirkstoffe, insbesondere temperaturempfindliche Rezepturbestandteile, dem aufgetrockneten Granulat zugegeben, aufgesprüht und/oder als getrennt ausgebildetes Korn unter Ausbildung eines Mehrkorngemisches zugemischt werden. Mit dem Verfahren ist die Herstellung lagerstabiler und verklebungsfreier Konzentrate für Wasch- und Reinigungsmittel für Haushalt und Gewerbe in schütt- und rieselfähiger hochverdichteter Granulatform mit Schüttgewichten von oberhalb 700 g/l möglich.

In der technischen Ausführungsform wird die Extrusion durch eine kreisförmige, mit Düsenbohrungen versehene Platte vorgenommen. Die Lochdüsen können vertikal oder horizontal angeordnet sein. Die vorliegende Anmeldung betrifft die Durchführung des Verfahrens mit vertikalen Lochdüsen, also mit einer im wesentlichen horizontal angeordneten Lochdüsenplatte, so daß die extrudierten Stränge nach unten hin aus der Platte austreten. Das Gehäuse des Extruders wird einschließlich des Extruder-Granulierkopfes auf einer erhöhten Temperatur, z. B. etwa 45 bis 50°C gehalten. Die durch die Lochformen austretenden feinen Stränge von 0,5 bis 5 mm, typischerweise 1 bis 1,6 mm Durchmesser werden in einem Heißabschlag von einem ein- oder mehrflügeligem rotierenden Messerkopf zu zylindrischen Granulaten zerkleinert. Das Länge/Durchmesser-Verhältnis der Granulate beträgt dabei etwa 1. Die Messerschneiden der Abschlagvorrichtung liegen entweder an der Düsenplatte mit einer geringen Anpreßkraft auf oder bilden mit der Platte einen Spalt, der sehr klein gegenüber dem Durchmesser der Lochdüsen ist. Die um eine lotrechte Drehachse rotierenden Messer beschleunigen die abgeschnittenen zylindrischen Granulate radial nach außen, so daß sie auf die Innenwand des Gehäuses, das auch als Granulierschacht bezeichnet wird, mit hoher Geschwindigkeit aufprallen. Die noch warmen Partikel weisen jedoch eine erhöhte Oberflächenklebrigkeit auf, insbesondere wenn das Vorgemisch einen erhöhten Gehalt an Tensiden entsprechend den Angaben in der internationalen Patentanmeldung WO91/02047 hat. Ein beträchtlicher Anteil der Granulate haftet dadurch an der Innenwand des Granulierschachtes, so daß sich Agglomerate und angebackene Produktschichten bilden. Zum Teil lösen sich die Anbackungen in unkontrollierter Weise als Agglomerate ab, zum anderen Teil wächst die Produktschicht weiter an, so daß der Produktabfluß gehemmt wird und schließlich die Abschlagvorrichtung nicht mehr betrieben werden kann. Die Anlage muß stillgesetzt und gereinigt werden.

Ein Weg zur Unterdrückung dieser Störungen besteht in der Wahl von Rezepturen, die zu Granulaten mit relativ geringer Oberflächenklebrigkeit führen. Es zeigt sich jedoch, daß auch in diesem Fall Störungen und Stillzeiten der Anlage nicht zu verhindern sind, obwohl sie bei bestimmter Rezepturwahl geringer werden. Besonders nachteilig ist in diesem Fall die notwendige starke Einschränkung auf bestimmte Rezepturen.

Ein anderer Weg, um den Störungen abzuhelfen, liegt im Einblasen von Druckluft in den Granulierschacht, so daß die Teilchen vor dem Auftreffen auf die Hand durch das Luftpolster abgefangen und in Richtung auf die Austrittsöffnung hin abgelenkt werden. Jedoch steigen die erforderlichen Strömungsgeschwindigkeiten und Luftmengen mit der Drehzahl des Messerkopfes, bis schließlich die Grenze des technisch möglichen und wirtschaftlich vertretbaren Aufwandes erreicht ist. Aus wirtschaftlichen Gründen wird jedoch ein derart hoher Durchsatz des Extruders mit entsprechend hoher Drehzahl des Abschlagmessers angestrebt, bei dem das Einblasen von Druckluft nicht mehr ausreicht, um Anbackungen an der Innenwand des Granulierschachtes zu verhindern.

Aus dem US-amerikanischen Patent 3 052 557 ist ein Verfahren zur Gefriertrocknung flüssiger Nahrungsmittelprodukte bekannt, bei dem schneeartige oder Kuchenartige Produkte erhalten werden. Anbackungen am Schacht der Apparatur werden durch einem vertikalen Zylinder vermieden, des aus einem flexiblen Material wie Polyethylen oder einer Metallfolie besteht. Der Zylinder ist an seinem unteren Ende starr fixiert.

Der Erfindung liegt daher die Aufgabe zugrunde, im eingangs genannten Verfahren auch bei sehr hohen Durchsätzen und ohne Einschränkung des Rezepturspektrums Anbackungen und Anhaftungen der Granulate an der Innenwand des Granulierschachtes zu vermeiden.

Die erfindungsgemäße Lösung liegt darin, daß man die zugeschnittenen, vom Abschlagmesser weggeschleuderten Partikel mit einem flexiblen, in Schwingungen versetzten Gewebe abfängt, das an dem einen, oberen Rand an der Strangpreßmaschine befestigt und am anderen, unteren Rand, insbesondere durch dort angebrachte Gewichte, nach unten gezogen wird wobei die dem Abschlagmesser abgewandte Außenseite des Gewebes mit Druckgaspulsen beaufschlagt wird. Bei dem Gewebe (Tuch) kann es sich um ein beliebiges flächiges Material handeln. Wesentlich ist die Flexibilität dieses Tuches und die Möglichkeit, es in Schwingungen zu versetzen. Das in Schwingungen versetzte flexible Tuch weicht beim Aufprall der Partikel aus und nimmt zunächst die Energie der aufprallenden Granulate teilweise auf.

Die Partikelenergie reicht dann nicht mehr für eine ausreichende plastische Verformung aus, um eine Haftfläche zwischen dem Partikel und dem Tuch auszubilden. Sollte dennoch ein Teil der Partikel an der Tuchoberfläche anhaften, so platzen die Teilchen durch die schwingende und flexible Tuchoberfläche sofort ab. Agglomerate oder gar Anbackungen in Schichten können damit nicht mehr entstehen. Die freie Schwingungsmöglichkeit des Tuches wird trotz der während des laufenden Betriebes ununterbrochen auf die Oberfläche in großer Zahl auftreffenden Granulate dadurch sichergestellt, daß das Tuch nach unten gezogen wird, so daß es von der Aufprallkraft der Granulate nicht gegen die Innenwand des Granulierschachtes gepreßt werden kann. Die Zugkraft kann auf unterschiedliche Art aufgebracht werden, wobei aber die Schwingungsbewegung nicht gestört werden soll. Besonders geeignet sind an der unteren Tuchkante angebrachte Gewichte. Zwischen dem Tuch und der Innenwand des Granulierschachtes befindet sich daher immer ein ausreichender Abstand, um die Schwingung des Tuches nicht zu behindern. Eine zu starke und straffe Spannung des Tuches ist aber andererseits nicht erwünscht. Auch in diesem Fall würden die Schwingungen des Tuches behindert.

Besonders geeignet ist ein glattes, dünnes und leichtes sowie luftdurchlässiges Tuch. Die glatte Oberfläche verringert die Wahrscheinlichkeit der Partikel, anzubacken. Ein dünnes und leichtes Tuch läßt sich leichter in Schwingungen versetzen. Die Luftdurchlässigkeit des Tuches kann von Vorteil sein, wenn das Tuch von außen mit Druckluft in Schwingungen versetzt wird. Die durch das Tuch hindurchtretende Luft trägt in diesem Fall ebenfalls zur Verhinderung von Anbackungen bei. Insbesondere wird vorgeschlagen, daß man zum Abfangen der Partikel ein Gewebetuch mit einer ausreichend glatten Oberfläche einsetzt, so daß aufprallende Partikel vom Tuch zurückgeschleudert werden, wobei ein synthetisches Gewebe, insbesondere aus Polyethylen, Polypropylen, Polyamid, Polyester und/oder Polytetrafluorethylen bevorzugt ist.

Die geometrische Form des Tuches unterliegt erfindungsgemäß keinen Einschränkungen. Wichtig ist jedoch, daß sämtliche vom Abschlagmesser weggeschleuderten Partikel vom Tuch aufgefangen werden. In einer bevorzugten Ausführungsform hat das Tuch die Form eines Zylinders, der den Bereich der vom Abschlagmesser abgeschleuderten Partikel umgibt. Als besonders günstig im Hinblick auf die Schwingungsbewegungen des Tuches hat es sich herausgestellt, wenn das Verhältnis zwischen Höhe und Radius des Tuchzylinders 0,5:1 bis 1:5 oder etwa 1:1 beträgt.

Das Abschlagmesser rotiert üblicherweise an der Lochdüsenplatte, wie oben ausgeführt worden ist. Daher wird ein Großteil der abgeschlagenen Partikel in der Höhe der Lochdüsenplatte weggeschleudert. Im Verfahren nach dem Stand der Technik finden sich daher in der Nähe der Lochdüsenplatte besonders viele Anbackungen. Um die Anbackungsprobleme gerade im Bereich dieser kritischen Zone zu lösen, wird in einer weiteren vorteilhaften Ausführungsform des erfindungsgemäßen Verfahrens vorgeschlagen, daß sich das Tuch nach oben hin bis unmittelbar an die Austrittsfläche der Stränge aus den Lochdüsen erstreckt und bis zur Austrittsfläche hin frei beweglich angeordnet ist. Die unmittelbar unterhalb der Lochdüsenplatte weggeschleuderten Partikel treffen damit auf eine in Schwingung versetzte Tuchfläche und werden von dieser abgebremst und sofort wieder entfernt. Auch in dieser kritischen Zone treten damit Anbackungen und Produktschichtenbildungen nicht auf. Die freie Beweglichkeit der Tuchfläche bis zur Austrittsfläche der Stränge aus den Lochdüsen hin ist wichtig, um die Schwingungsfähigkeit des Tuches auch in diesem Bereich sicherzustellen.

Die freie Beweglichkeit des Tuches auch im Bereich der Lochdüsenplatte wird durch eine besonders geeignete Aufhängung des Tuches gewährleistet. Hier ist der obere Rand des Tuches zwischen mindestens zwei Ringen eingespannt. Die dem Abschlagmesser zugewandte Tuchfläche hängt frei herab und schließt mit der ihr gegenüberliegenden Fläche des Ringes einen Winkel von 20° bis 80°, insbesondere einen Winkel von 40° bis 50° ein, so daß auch dieser Teil der Tuchfläche frei nach außen hin beweglich ist. Die Tuchfläche im Bereich der Lochdüsenplatte ist damit nicht nur nach innen in Richtung auf die Achse der Schneidvorrichtung, sondern auch nach außen hin beweglich. Die freie unbehinderte Schwingungsmöglichkeit ist damit auch in dieser kritischen Zone sichergestellt.

Erfindungsgemäß ist es wesentlich, daß das Tuch während des Betriebes in Schwingungen versetzt wird. Hierzu sind eine Reihe von Möglichkeiten denkbar. Das Tuch kann regelmäßig schwingen. Die Schwingungen können durch eine besondere Mechanik erregt werden. Auch andere Möglichkeiten sind gegeben. In einer bevorzugten Ausführungsform des erfindungsgemäßen Verfahrens wird jedoch vorgeschlagen, daß man das Tuch pulsationsartig in Bewegung und damit in stochastische Schwingungen versetzt. Bevorzugt ist dabei, daß man die dem Abschlagmesser abgewandte Außenfläche des Tuches mit Druckluftpulsen beaufschlägt. Die zwischen der Innenwand des Granulierschachtes und dem Tuch sich ausbildenden Druckschwankungen versetzen das Tuch in unregelmäßige Schwingungen, die zu einem schnellen Abplatzen von anhaftenden Partikeln führen. Die Stärke und Frequenz der Druckgaspulse lassen sich auf einfache Weise den speziellen Anforderungen im laufenden Betrieb anpassen. Sie können in Anhängigkeit vom Durchsatz bzw. der Drehzahl des Abschlagmessers sowie der Stärke der Oberflächenklebrigkeit der Granulate eingestellt werden.

Ein weiteres wesentliches Merkmal der Erfindung betrifft eine gewisse, nach unten gerichtete Spannung des Tuches, so daß das Tuch trotz der in großer Zahl aufprallenden Partikel nicht an die Innenwand des Granulierschachtes gedrückt wird. Eine gewisse, von der Gesamtkraft der aufprallenden Partikel abhängigen Mindestspannung des Tuches sollte daher aufrechterhalten werden. Andererseits ist eine zu hohe Spannung des Tuches ungünstig, da in diesem Fall die Flexibilität und Schwingungsfähigkeit des Tuches vermindert wird. Es existiert daher ein optimaler, vom Durchsatz der Anlage abhängiger Wert der von den Gewichtskörpern aufgebrachten Tuchspannung. Dieser optimale Bereich wurde in Versuchen gefunden. Bevorzugt stellt man daher die das Tuch nach unten ziehende Kraft, die insbesondere von den an der unteren Tuchkante angebrachten Gewichtskörpern aufgebracht wird, so ein, daß das Verhältnis der auf ein Flächenelement des Tuches wirkenden Zugkraft zur auf dieses Element wirkenden gesamten Zentrifugalkraft der aufprallenden Partikel bei 10:1 bis 1:1 und insbesondere bei etwa 2:1 liegt. Die gesamte Zentrifugalkraft der aufprallenden Partikel läßt sich aus der Drehzahl des Abschlagmessers, einem mittleren Abstand der austretenden Stränge von der Achse der Schneidvorrichtung, der Partikelmasse und der Gesamtzahl der gleichzeitig auf das Flächenelement des Tuches aufprallenden Partikel bestimmen.

Die Erfindung betrifft ferner eine Vorrichtung, insbesondere einen Extruder zum Durchführen des erfindungsgemäßen Verfahrens entsprechend den Vorrichtungsansprüchen. Sinngemäß gilt hier das zu dem obengenannten Verfahren Gesagte. Die der besonderen Ausgestaltung der Vorrichtung zugrundeliegende Problematik und die Vorteile der besonderen Ausführungsformen sollen daher an dieser Stelle nicht wiederholt werden.

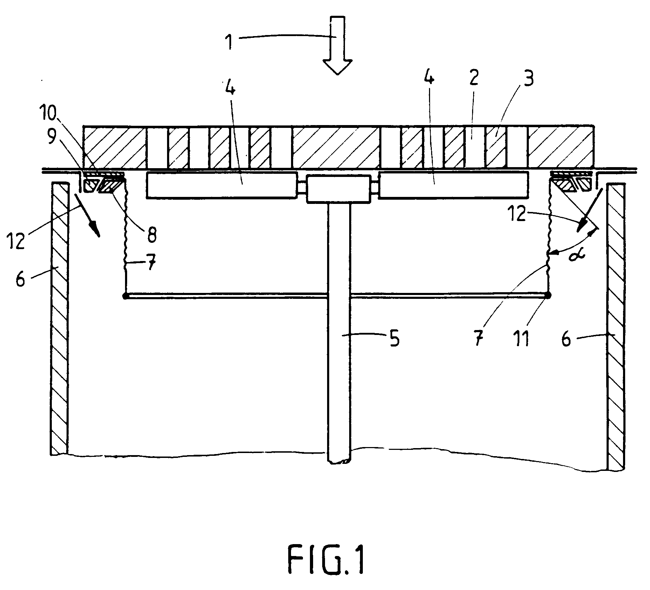

In der einzigen Zeichnung wird ein Ausführungsbeispiel des erfindungsgemäßen Granulierkopfes näher beschrieben, an dem auch das erfindungsgemäße Verfahren noch deutlicher erkennbar wird. In Figur 1 ist ein Längsschnitt durch die für die vorliegende Erfindung wesentlichen Teile des, Granulierkopfes eines Extruders mit einer Abschlagvorrichtung dargestellt. Von einem Doppelschneckenextruder wird das durch den Pfeil 1 dargestellte Gemisch plastifiziert und durch eine horizontal angeordnete, mit Lochdüsen 2 versehene Platte 3 gepreßt. Das Gemisch tritt an der unteren Fläche der kreisförmigen Platte 3 aus. Die Platte 3 sowie die Lochdüsen 2 sind in dieser Figur nur schematisch dargestellt. Tatsächlich enthält die Platte 3 sehr viel mehr als die dargestellten acht Lochdüsen 2, die außerdem einen sehr viel kleineren Durchmesser und auch eine besondere Form haben. Diese Einzelheiten sind ausführlich in der schon genannten WO91/13678 im Detail beschrieben.

Die von der Unterseite der Lochdüsenplatte 3 austretenden Materialstränge werden von mehreren Messern 4 in Granulate zerschnitten. Die Messer 4 sind an einer vertikalen Messerwelle 5 befestigt. Die Schneiden der Messer 4 sind unmittelbar an der unteren Fläche der Lochdüsenplatte 3 angeordnet. Ferner zeigt Figur 1 schematisch die Außenwand 6 des Granulierschachts.

Das erfindungsgemäß angeordnete Tuch 7 hat die Form eines nach unten hängenden zylinderförmigen Schlauches und wird durch eine dreiteilige Ringbefestigung gehalten. Die dreiteilige Ringbefestigung besteht aus einem inneren Ring 8, einem äußeren Ring 9, zwischen denen der obere Rand des Tuches 7 eingepreßt ist, und einem weiteren Ring 10. Das Tuch 7 liegt ferner auf der Oberseite des inneren Ringes 8 auf und hängt im weiteren an der Innenkante des inneren Ringes 8 nach unten. Zusätzlich zu den beiden Ringen 8 und 9 ist das Tuch mit dem weiteren scheibenförmigen Ring 10 befestigt, der auf beiden Ringen 8 und 9 aufliegt und das Tuch an die Oberseite des inneren Ringes 8 anpreßt. Ring 10 dient zur zusätzlichen Sicherung der Befestigung und kann gegebenenfalls auch entfallen. Wichtig bei der Befestigung des Tuches an der dreiteiligen Ringbefestigung ist die freie Beweglichkeit jedes Flächenelementes des Tuches, insbesondere im Bereich der unteren Fläche der Lochdüsenplatte 3. Die freie Beweglichkeit in diesem kritischen Bereich wird durch eine Abschrägung der inneren Fläche des inneren Ringes 8 nach außen und unten hin erreicht. Die Abschrägung ist so gewählt, daß die innere Fläche des inneren Rings 8 mit dem Tuch einen Winkel alpha von 45° einschließt.

Das Tuch wird von durchbohrten, aufgefädelten Gewichtskörpern 11, die an der unteren Kante des Tuches 7 angebracht sind, in Spannung gehalten. Zwischen dem Tuchgewebe 7 und der Gehäusewand 6 des Granulierschachts wird pulsationsartig Druckluft eingespeist, die das Tuch 7 in stochastische Schwingungen versetzt. Die Zufuhr der Druckluft wird durch die Pfeile 12 schematisch angedeutet.

### Bezugszeichenliste

- 1: Pfeil
- 2: Lochdüse
- 3: Platte
- 4: Messer
- 5: Messerwelle
- 6: Außenwand
- 7: Tuch
- 8: innerer Ring
- 9: äußerer Ring
- 10: weiterer Ring
- 11: Gewichtskörper
- 12: Pfeile

## Patentansprüche

1. Verfahren zum Herstellen verdichteter, oberflächlich klebriger Granulate, die insbesondere in Wasch- und Reinigungsmitteln eingesetzt werden, wobei ein homogenes Vorgemisch über Lochdüsen bei hohen Drucken zu einem Strang verpreßt und der noch unten aus den im wesentlichen vertikal angeordneten Lochdüsen austretende Strang mit einem rotierenden Abschlagmesser auf die vorbestimmte Partikellänge quer zerteilt wird, so daß die Partikel radial weggeschleudert werden,
dadurch gekennzeichnet,
daß man die zugeschnittenen, vom Abschlagmesser weggeschleuderten Partikel mit einem flexiblen, in Schwingungen versetzten Gewebe abfängt, das an dem einen, oberen Rand an der Strangpreßmaschine befestigt und am anderen, unteren Rand, insbesondere durch dort angebrachte Gewichte, nach unten gezogen wird, wobei die dem Abschlagmesser abgewandte Außenseite des Gewebes mit Druckgaspulsen beaufschlagt wird.

2. Verfahren nach Anspruch 1,
dadurch gekennzeichnet,
daß man zum Abfangen der Partikel ein Gewebe mit einer ausreiched glatten Oberfläche einsetzt, so daß aufprallende Partikel vom Gewebe zurückgeschleudert werden, wobei ein synthetisches Gewebe, insbesondere aus Polyethylen, Polypropylen, Polyamid, Polyester und/oder Polytetrafluorethylen bevorzugt ist.

3. Verfahren nach Anspruch 1 oder 2,
dadurch gekennzeichnet,
daß das Gewebe die Form eines Zylinders hat, der den Bereich der vom Abschlagmesser abgeschleuderten Partikel umgibt.

4. Verfahren nach Anspruch 3, dadurch gekennzeichnet, daß das Verhältnis zwischen Höhe und Radius des Gewebezylinders 0,5:1 bis 1:5, oder etwa 1:1 beträgt.

5. Verfahren nach einem der Ansprüche 1 bis 4,
dadurch gekennzeichnet,
daß sich das Gewebe nach oben hin bis unmittelbar an die Austrittsfläche der Stränge aus den Lochdüsen erstreckt und bis zu Austrittsfläche hin frei beweglich angeordnet ist.

6. Verfahren nach Anspruch 5,
dadurch gekennzeichnet,
daß der obere Rand des Gewebes zwischen mindestens zwei Ringen eingespannt ist, wobei die dem Abschlagmesser zugewandte Gewebefläche frei herabhängt und mit der ihr gegenüberliegenden Fläche des Ringes einen Winkel zwischen 20° und 80°, insbesondere einen Winkel von 40° bis 50° einschließt, so daß auch dieser Teil der Gewebefläche frei nach außen hin beweglich ist.

7. Verfahren nach einem der Ansprüche 1 bis 6,
dadurch gekennzeichnet,
daß man das Gewebe pulsationsartig in Bewegung und damit in stochastische Schwingungen versetzt.

8. Verfahren nach Anspruch 7,
dadurch gekennzeichnet,
daß man die dem Abschlagmesser abgewandte Außenfläche des Gewebes mit Druckluftpulsen beaufschlägt.

9. Verfahren nach einem der Ansprüche 1 bis 8,
dadurch gekennzeichnet,
daß man die das Gewebe nach unten ziehende Kraft, die insbesondere von den an der unteren Gewebekante angebrachten Gewichtskörpern aufgebracht wird, so einstellt, daß das Verhältnis der auf ein Flächenelement des Gewebes wirkenden Zugkraft zur auf dieses Element wirkenden gesamten Zentrifugalkraft der aufprallenden Partikel bei 10:1 bis 1:1 und insbesondere bei etwa 2:1 liegt.

10. Vorrichtung zum Granulieren eines homogenen Vorgemisches bei hohen Drucken durch strangförmiges Verpressen durch im wesentlichen vertikal angeordnete Lochdüsen, mit einem unterhalb der Lochdüsen angeordneten, rotierenden Abschlagmesser,
gekennzeichnet durch
ein den Bereich des Abschlagmessers umgebendes, flexibles Gewebe, das an dem einen, oberen Rand an der Vorrichtung befestigt ist und an dessen unterem Rand nach unten ziehende Kräfte angreifen, die insbesondere durch am unteren Geweberand angebrachte Gewichtskörper aufgebracht werden, wobei die Vorrichtung eine Einspeisung von Druckgas, insbesondere Druckluft, auf die dem Abschlagmesser abgewandte Außenseite des Gewebes vorsieht.

11. Vorrichtung nach Anspruch 10,
dadurch gekennzeichnet,
daß das Gewebe ein synthetisches Gewebe ist und insbesondere aus Polyethylen, Polypropylen, Polyamid, Polyester und/oder Polytetrafluorethylen besteht.

12. Vorrichtung nach Anspruch 10 oder 11,
dadurch gekennzeichnet,
daß das Gewebe die Form eines Zylinders hat.

13. Vorrichtung nach Anspruch 12,
dadurch gekennzeichnet,
daß das Verhältnis zwischen Höhe und Radius des Gewebezylinders 0,5:1 bis 1:5 oder etwa 1:1 beträgt.

14. Vorrichtung nach einem der Ansprüche 10 bis 13,
dadurch gekennzeichnet,
daß sich das Gewebe nach oben hin bis unmittelbar an die Austrittsfläche der Stränge aus den Lochdüsen erstreckt und bis zur Austrittsfläche hin frei beweglich angeordnet ist.

15. Vorrichtung nach Anspruch 14,
dadurch gekennzeichnet,
daß der obere Rand des Gewebes zwischen mindestens zwei Ringen eingespannt ist, wobei die dem Abschlagmesser zugewandte Gewebefläche frei herabhängt und mit der ihr gegenüberliegenden Fläche des Ringes einen Winkel von 20° bis 80°, insbesondere einen Winkel von 40° bis 50° einschließt, so daß auch dieser Teil der Gewebefläche frei nach außen hin beweglich ist.

## Claims

1. A process for the production of compacted, surface-tacky granules which are used in particular in detergents in which a homogeneous compound is extruded under high pressures through a multiple-bore extrusion die to form strands and the strands issuing from the substantially vertical extrusion bores are cut transversely to the predetermined particle length by a rotating cutting blade so that the particles are projected away in the radial direction, characterized in that, after cutting to size, the particles projected away from the cutting blade are collected in a flexible, vibrating cloth which is fixed to the extruder at its upper edge and which is pulled downwards at its other, lower edge, more particularly by weights arranged there, the outside of the cloth remote from the cutting blade being subjected to compressed gas pulses.

2. A process as claimed in claim 1, characterized in that a cloth with a sufficiently smooth surface is used to collect the particles so that impinging particles are thrown back by the cloth, a synthetic fabric, more particularly woven from polyethylene, polypropylene, polyamide, polyester and/or polytetrafluoroethylene, being preferred.

3. A process as claimed in claim 1 or 2, characterized in that the cloth is in the form of a cylinder which surrounds the area where the particles are projected away from the cutting blade.

4. A process as claimed in claim 3, characterized in that the height-to-radius ratio of the cloth cylinder is 0.5:1 to 1:5 or of the order of 1:1.

5. A process as claimed in any of claims 1 to 4, characterized in that the cloth extends upwards as far as the strand exit surface of the extrusion die and is arranged for free mobility up to that surface.

6. A process as claimed in claim 5, characterized in that the upper edge of the cloth is clamped between at least two rings, the surface of the cloth facing the cutting blade hanging down freely and, with the opposite face of the ring, forming an angle of 20 to 80° and, more particularly, 40 to 50°, so that this part of the cloth surface is also able to move freely outwards.

7. A process as claimed in any of claims 1 to 6, characterized in that the cloth is pulsated and, hence, stochastically vibrated.

8. A process as claimed in claim 7, characterized in that compressed air pulses, are applied to the outer surface of the cloth remote from the cutting blade.

9. A process as claimed in any of claims 1 to 8, characterized in that the force by which the cloth is pulled downwards and which is applied in particular by the weights arranged along the lower edge of the cloth is preferably adjusted in such a way that the ratio of the tensile force acting on one surface element of the cloth to the total centrifugal force of the impinging particles acting on that element is from 10:1 to 1:1 and, more particularly, of the order of 2:1.

10. A machine for granulating a homogeneous compound under high pressures by extrusion in strand form through extrusion bores arranged substantially vertically, comprising a rotating cutting blade arranged below the extrusion bores, characterized by a flexible cloth which surrounds the area around the cutting blade, which is fixed to the machine at its upper edge and which is subjected at its lower edge to downwardly pulling forces which are applied in particular by weights arranged along the lower edge of the cloth, the machine providing for the application of compressed gas, more particularly compressed air, to the outside of the cloth remote from the cutting blade.

11. A machine as claimed in claim 10, characterized in that the cloth is a synthetic fabric and, more particularly, consists of polyethylene, polypropylene, polyamide, polyester and/or polytetrafluoroethylene.

12. A machine as claimed in claim 10 or 11, characterized in that the cloth is in the form of a cylinder.

13. A machine as claimed in claim 12, characterized in that the height-to-radius ratio of the cloth cylinder is 0.5:1 to 1:5 or of the order of 1:1.

14. A machine as claimed in any of claims 10 to 13, characterized in that the cloth extends upwards as far as the strand exit surface of the extrusion die and is arranged for free mobility up to that surface.

15. A machine as claimed in claim 14, characterized in that the upper edge of the cloth is clamped between at least two rings, the surface of the cloth facing the cutting blade hanging down freely and, with the opposite face of the ring, forming an angle of 20 to 80° and, more particularly, 40 to 50°, so that this part of the cloth surface is also able to move freely outwards.

## Revendications

1. Procédé de fabrication de granulés comprimés à surface collante, qui sont utilisés en particulier dans des produits de lavage et de nettoyage, tandis qu'un prémélange homogène est comprimé par l'intermédiaire de filières à trous à des pressions élevées en un cordon et le cordon sortant vers le bas des filières à trous disposées essentiellement verticales est partagé transversalement par un couteau de coupe tournant à une longueur de particules prédéterminée, de sorte que les particules sont centrifugées radialement
caractérisé en ce qu'
on intercepte les particules projetées au loin par la lame de coupe avec un tissu flexible, mis à vibrer, qui est fixé sur son bord supérieur à la machine extrudeuse et sur l'autre bord inférieur est tiré vers le bas, en particulier par des poids appliqués à cet endroit, tandis que la face extérieure du tissu opposée du couteau de coupe est soumise à des pulsations d'air comprimé.

2. Procédé selon la revendication 1,
caractérisé en ce que
pour intercepter les particules, on utilise un tissu ayant une surface suffisamment unie, de façon que les particules de tissu la heurtant soient renvoyées, un tissu synthétique, en particulier en polyéthylène, polypropylène, polyamide, polyester et/ou polytétrafluoréthylène étant préféré.

3. Procédé selon les revendications 1 ou 2,
caractérisé en ce que
le tissu a la forme d'un cylindre, qui entoure la zone des particules lancées par le couteau de coupe.

4. Procédé selon la revendication 3,
caractérisé en ce que
le rapport entre hauteur et rayon du cylindre de tissu se monte à 0,5 : 1 jusqu'à 1 : 5, ou à environ 1 : 1.

5. Procédé selon une des revendications 1 à 4,
caractérisé en ce que
le tissu s'étend vers le haut directement jusqu'à la face de sortie des cordons des filières à trous et est monté mobile librement jusqu'à la face de sortie.

6. Procédé selon la revendication 5,
caractérisé en ce que
le bord supérieur du tissu est serré entre au moins deux anneaux, tandis que la surface du tissu tournée vers le couteau de coupe pend librement vers le bas et forme, avec la face opposée à lui de l'anneau, un angle compris entre 20° et 80°, en particulier un angle compris entre 40 et 50°, de sorte que cette partie de la surface du tissu est mobile librement vers l'extérieur.

7. Procédé selon une des revendications 1 à 6,
caractérisé en ce qu'
on met le tissu en mouvement à pulsations et donc en vibrations stochastiques.

8. Procédé selon la revendication 7,
caractérisé en ce qu'
on soumet la surface du tissu éloignée du couteau de coupe à des impulsions d'air comprimé.

9. Procédé selon la revendication 7,
caractérisé en ce qu'
on ajuste la force tirant le tissu vers le bas, qui est appliquée en particulier par les corps de poids montés sur le bord inférieur du tissu, de façon que le rapport de la force de traction agissant sur un élément de surface du tissu, par rapport à la force centrifuge totale des particules heurtant cet élément et agissant sur lui, se situe de 10 : 1 à 1 : 1 et en particulier à environ 2 : 1.

10. Dispositif pour granuler un prémélange homogène à des pressions élevées par pressage sous forme de cordon à travers des filières à trous placées essentiellement verticalement, avec un couteau de coupe tournant, disposé en dessous des filières,
caractérisé par
un tissu flexible, entourant la zone du couteau de coupe, qui est fixé par son bord supérieur au dispositif et sur le bord inférieur duquel s'exercent des forces de traction vers le bas qui, en particulier, sont appliquées par des corps de poids montés sur le bord inférieur du tissu, tandis que le dispositif prévoit une introduction de gaz sous pression, en particulier d'air comprimé, sur la face extérieure du tissu opposée au couteau de coupe.

11. Dispositif selon la revendication 10,
caractérisé en ce que
le tissu est un tissu synthétique et, en particulier, se compose de polyéthylène, polypropylène, polyamide, polyester et/ou polytétrafluoréthylène.

12. Dispositif selon les revendications 10 ou 11,
caractérisé en ce que
le tissu a la forme d'un cylindre.

13. Dispositif selon la revendication 12,
caractérisé en ce que
le rapport entre hauteur et rayon du cylindre de tissu va de 0,5 : 1 à 1 : 5, ou se monte à environ 1 : 1.

14. Dispositif selon une des revendications 10 à 13,
caractérisé en ce que
le tissu s'étend vers le haut directement jusqu'à la face de sortie des cordons des filières à trous et il est disposé librement mobile jusqu'à la face de sortie.

15. Dispositif selon la revendication 14,
caractérisé en ce que
le bord supérieur du tissu est serré au moins entre deux anneaux, tandis que la surface du tissu tournée vers le couteau de coupe pend librement vers le bas et forme avec la surface de l'anneau opposée à elle un angle de 20° à 80°, en particulier un angle de 40° à 50°, de sorte que cette partie aussi de la surface du tissu est mobile librement vers l'extérieur.
